# EUROPÄISCHE PATENTSCHRIFT

(11) **EP 3 197 639 B1**
(45) Veröffentlichungstag und Bekanntmachung des Hinweises auf die Patenterteilung: **30.04.2025**
(21) Anmeldenummer: 15763548.3
(22) Anmeldetag: 09.09.2015
(51) Int. Cl.: B25B 1/02, B25B 1/18, B25B 5/14, B27C 1/00, B27F 1/00, B27M 1/00, B23Q 3/00

(54) **BEARBEITUNGSVORRICHTUNG**
MACHINING DEVICE
DISPOSITIF D'USINAGE

(30) Priorität: 22.09.2014 DE 102014219097; 03.07.2015 DE 102015212541
(43) Veröffentlichungstag der Anmeldung: 02.08.2017
(73) Patentinhaber: HOMAG GmbH, 72296 Schopfloch (DE)
(72) Erfinder: FRIESE, Stefan, 72285 Pfalzgrafenweiler (DE); SCHMIEDER, Volker, 72116 Mössingen (DE); STURM, Christian, 72172 Sulz am Neckar (DE)
(74) Vertreter: Hoffmann Eitle
(86) Internationale Anmeldenummer: PCT/EP2015/070600
(87) Internationale Veröffentlichungsnummer: WO 2016/045968

(56) Entgegenhaltungen:
- EP-A2- 1 992 464
- EP-A2- 2 067 586
- WO-A1-2010/041285
- IT-A1- PC20 110 018

## Beschreibung

### Technisches Gebiet

Die Erfindung betrifft eine Bearbeitungsvorrichtung, insbesondere zum Bearbeiten von Werkstücken aus Holz, Holzwerkstoffen, Kunststoff oder dergleichen, insbesondere nach dem Oberbegriff von Anspruch 1 und ein Verfahren zum Betreiben einer solchen Bearbeitungsvorrichtung.

### Stand der Technik

Bearbeitungsvorrichtungen zur Bearbeitung von Werkstücken, insbesondere zum Bearbeiten von Werkstücken aus Holz, Holzwerkstoffen, Kunststoff oder dergleichen, sind im Stand der Technik vielfach bekannt. Solche Bearbeitungsvorrichtungen weisen üblicherweise einen Werkstücktisch mit einer Werkstückhalterung auf, mittels welcher ein Werkstück anordenbar und zumindest zeitweise klemmend haltbar ist, um während der klemmenden Halterung das Werkstück zu bearbeiten. Solche Werkstücktische mit Werkstückhalterungen können im Wesentlichen stillstehend oder mittels Vorschubeinrichtungen verfahrbar ausgebildet sein.

Dabei kann bei einer im Wesentlichen stillstehenden Ausführung des Werkstücktischs mit der Werkstückhalterung das Werkzeug zur Bearbeitung des Werkstücks an das Werkstück selbst herangeführt werden, um aufgrund einer erzeugten Relativbewegung von Werkstück und Werkzeug eine Bearbeitung des Werkstücks zu bewirken.

Alternativ dazu kann bei einer im Wesentlichen verfahrbaren Ausführung des Werkstücktischs mit der Werkstückhalterung das Werkstück zur Bearbeitung an das Werkzeug selbst herangeführt werden, um aufgrund einer erzeugten Relativbewegung von Werkstück und Werkzeug eine Bearbeitung des Werkstücks zu bewirken.

Dazu kann die Bearbeitungsvorrichtung beispielsweise ein stillstehendes oder verfahrbares Portal oder einen stillstehenden oder verfahrbaren Ausleger oder Ähnliches aufweisen, an welchem das Werkzeug zur Bearbeitung des Werkstücks wiederum stillstehend oder verlagerbar geführt werden kann, um zusammen mit einer etwaigen Verlagerung des Werkstücks die beabsichtigten Bearbeitungen am Werkstück vornehmen zu können. Dabei kann entweder das Werkstück am Werkzeug vorbeigeführt werden oder umgekehrt oder es können sich auch sowohl das Werkstück als auch das Werkzeug bei der Bearbeitung verlagern, so dass eine gezielte Relativbewegung zwischen Werkzeug und Werkstück vorgesehen wird, um das Werkstück beispielsweise entlang einer Seite oder Kante bearbeiten zu können.

So ist durch die DE 101 37 839 A1 bekannt geworden, dass zwei Werkstücktische nebeneinander verlagerbar angeordnet werden, wobei entweder der eine Werkstücktisch oder der andere Werkstücktisch das Werkzeug mit seiner Werkstückhalterung hält, während der Werkstücktisch mittels seiner Vorschubeinrichtungen am Werkzeug vorbei geführt wird, um eine Seitenkante des Werkstücks zu bearbeiten. Anschließend kann der eine Werkstücktisch zu dem anderen Werkstücktisch in eine Übergabeposition verfahren und das Werkstück kann von dem einen Werkstücktisch direkt auf den anderen Werkstücktisch umgespannt werden, so dass anschließend die noch nicht bearbeitete andere Seitenkante des Werkstücks bearbeitet werden kann.

Dabei ist die notwendige Höhe des Werkstücks für die Einspannung jedoch konstant, weil die Spannbacken der Werkstückhalterung des Werkzeugtischs fest vorgegeben sind und die unteren Spannbacken auf dem Werkzeugtisch in ihrer Höhe festgelegt sind. Soll damit jedoch ein Werkstück mit einer Kontur bearbeitet werden, die auf beiden gegenüberliegenden Seitenkanten unterschiedlich hoch ist, weil beispielsweise die jeweilige Unterkante versetzt zueinander ausgebildet sein soll, so kann dieses Werkstück nicht ohne Weiteres mittels der so ausgebildeten Bearbeitungsvorrichtung bearbeitet werden, weil beim Umspannen von einem Werkstücktisch zum anderen Werkstücktisch kein definierter Zustand zum Umspannen vorliegt.

Bei der Herstellung von Fensterrahmenteilen, insbesondere aus Holz, muss ein sehr großer Umfang an verschiedenen Profilen erzeugt werden, was üblicherweise durch Fräsen durchgeführt wird. Dabei sind auch üblicherweise die Längs- als auch die Schmalseiten der Rahmenteile zu bearbeiten. Um den immer häufiger gewünschten vermehrten Lichteinfall insbesondere in Wohnräumen zu gestatten, werden die Breiten der Fensterrahmenteile immer weiter reduziert. Dies führt dazu, dass nur noch sehr begrenzte freie Klemmflächen an den Fensterrahmenteilen zum Halten der Fensterrahmenteile in den Spannbacken der Werkstückhalterung für die spanende Bearbeitung des Werkstücks zur Verfügung stehen, wobei dieses Problem immer häufiger auftritt, wenn eine erste Längsseite des Fensterrahmenteils bereits profiliert wurde.

Bei Werkstücktischen gemäß der DE 101 37 839 A1 liegen die vorgesehenen Spannbacken der Werkstückhalterung als Fixierelemente auf der unteren und auf der oberen Auflagefläche des Fensterrahmenteils auf und klemmen so das Werkstück zwischen sich ein. Dies hat zwar den Vorteil, dass das Werkstück bei Spann- und Umspannvorgängen ein konstantes Höhenniveau in Vertikalrichtung und ggf. auch eine konstante Lage in Lateralrichtung beibehalten kann, es hat jedoch auch den Nachteil, dass nur auf den oberen und unteren Auflageflächen gespannt werden kann.

Bei modernen Fernsterrahmenteilen als Werkstücke ist es jedoch immer häufiger notwendig, dass das Werkstück auch in bereits bearbeiteten Bereichen der seitlichen Profilierung, also beispielsweise in bereits erzeugten Falzen, gespannt werden kann.

Die EP 1 992 464 A2 offenbart eine Bearbeitungsvorrichtung nach dem Oberbegriff von Anspruch 1.

Die WO 2010/041285 A1 offenbart eine Bearbeitungsvorrichtung mit einem Werkstücktisch und einer Zuführvorrichtung, wobei nicht offenbart ist, dass das zumindest eine Werkstück in drei Dimensionen hinsichtlich des zumindest einen Werkstücktischs positionierbar ist.

Die IT PC20 110 018 A1 offenbart eine Bearbeitungsvorrichtung mit zwei Werkstücktischen und einer Zuführvorrichtung, wobei jedoch nicht offenbart ist, dass das zumindest eine Werkstück in drei Dimensionen hinsichtlich des zumindest einen Werkstücktischs positionierbar ist.

Die EP 2 067 586 A2 offenbart eine Bearbeitungsvorrichtung mit zwei Werkstücktischen und einer Zuführvorrichtung, wobei jedoch nicht offenbart ist, dass das zumindest eine Werkstück in drei Dimensionen hinsichtlich des zumindest einen Werkstücktischs positionierbar ist.

### Darstellung der Erfindung, Aufgabe, Lösung, Vorteile

Es ist die Aufgabe der Erfindung, eine Bearbeitungsvorrichtung zu schaffen, welche auch bei kürzeren Werkstücken eine deutliche Steigerung der Bearbeitungseffizienz ermöglicht. Auch ist es die Aufgabe der Erfindung, ein diesbezügliches Verfahren zu schaffen.

Diese Aufgabe zur Bearbeitungsvorrichtung wird mit den Merkmalen von Anspruch 1 gelöst.

Ein Ausführungsbeispiel der Erfindung betrifft eine Bearbeitungsvorrichtung, insbesondere zum Bearbeiten von Werkstücken aus Holz, Holzwerkstoffen, Kunststoff oder dergleichen, mit zumindest einem Werkstücktisch mit einer Werkstückhalterung zum Halten zumindest eines Werkstücks und mit einer Zuführvorrichtung zum Zuführen zumindest eines Werkstücks zu dem zumindest einen Werkstücktisch, wobei das zumindest eine Werkstück in drei Dimensionen hinsichtlich des zumindest einen Werkstücktischs positionierbar ist. Dabei kann ein Werkstück einem Werkstücktisch zugeführt und auf diesem positioniert und von diesem gehalten werden oder es können mehrere Werkstücke einem Werkstücktisch zugeführt, auf diesem positioniert und von diesem gehalten werden. Sind mehrere Werkstücktische vorgesehen, so kann ein oder können mehrere Werkstücke dem einen oder dem anderen Werkstücktisch jeweils zugeführt und auf diesem jeweils positioniert und von diesem jeweils gehalten werden. Dadurch wird erlaubt, dass auf einem Werkstücktisch auch mehr als ein Werkstück gleichzeitig gehalten und im Wesentlichen in einer Aufspannung, also quasi gleichzeitig, bearbeitet werden kann. Durch ein Vorsehen beispielsweise zweier Werkstücktische kann eine Bearbeitung der in einem Werkstücktisch aufgespannten Werkstücke vollständig erfolgen, wobei dann vorteilhaft abwechselnd Werkstücke des einen oder des anderen Werkstücktischs an einem Werkzeug bearbeitet werden können. Dadurch wird erreicht, dass das zumindest eine Werkstück nicht nur an seiner Oberseite und Unterseite eingespannt werden kann, sondern auch an anderen Flächen gespannt werden kann, wie an durch die Bearbeitung erzeugten Falzen, Kanten etc. Dadurch kann nach einer ersten Aufspannung an der Oberseite und der Unterseite des Werkstücks nach anfänglicher Bearbeitung ein Umspannen auf andere Flächen zum Spannen vorgenommen werden, um das Werkstück sicher halten zu können und um es weiter bearbeiten zu können. Auch wird dadurch eine höhere Effektivität und Qualität der Bearbeitung erreicht, wenn das zumindest eine Werkstück beispielsweise in einer Aufspannung an drei Seiten bearbeitet werden kann, also an einer Längsseite und an zwei Schmalseiten. Werden zwei oder mehr Werkstücke in einer Aufspannung eingespannt, so kann die Effektivität weiter erhöht werden, weil dann die Werkstückwechselzeit nicht nach jedem einzelnen Werkstück anfällt.

Erfindungsgemäß ist ein Werkstücktisch vorgesehen oder es sind zwei oder mehr Werkstücktische vorgesehen. Diese sind jeweils unabhängig voneinander verfahrbar und sie können jeweils unabhängig voneinander ein oder mehr als ein Werkstück aufspannen. Bei mehr als einem Werkstücktisch steigert sich die Effektivität noch einmal.

Erfindungsgemäß ist der zumindest eine Werkstücktisch oder zumindest einer der Werkstücktische oder jeder der Werkstücktische zumindest in seiner Längsrichtung relativ zur Zuführvorrichtung verlagerbar. Dadurch kann je nach angefahrener Position des entsprechenden Werkstücktischs das zumindest eine Werkstück in einer anderen Position auf dem besagten Werkstücktisch positioniert werden. Auch können dadurch mehrere Werkstücke an unterschiedlichen Positionen des Werkstücktischs positioniert werden.

Erfindungsgemäß ist die Zuführvorrichtung zumindest in einer Richtung relativ zu dem zumindest einen Werkstücktisch verlagerbar. Dadurch kann das zumindest eine Werkstück individuell auf dem besagten Werkstücktisch positioniert werden und insbesondere auch individuell umgespannt werden.

Erfindungsgemäß ist der zumindest eine Werkstücktisch oder einer der Werkstücktische oder jeder der Werkstücktische in seiner Längsrichtung relativ zur Zuführvorrichtung jeweils verlagerbar und die Zuführvorrichtung in zwei Richtungen relativ zum besagten jeweiligen Werkstücktisch verlagerbar. Dadurch werden die drei Dimensionen der Verlagerung auf den besagten jeweiligen Werkstücktisch und auf die besagte Zuführvorrichtung verteilt, so dass eine einfache Konstruktion der Bearbeitungsvorrichtung ermöglicht wird.

Erfindungsgemäß ist der besagte Werkstücktisch bzw. die jeweiligen Werkstücktische mittels jeweils einer Vorschubeinheit in seiner bzw. ihrer Längsrichtung verlagerbar.

Erfindungsgemäß weist der jeweilige Werkstücktisch eine Werkstückhalterung mit einer Anzahl von Spannelementen auf, die in der Längsrichtung beabstandet voneinander angeordnet sind. Dadurch kann zumindest ein Werkstück oder mehrere Werkstücke in Längsrichtung des jeweiligen Werkstücktischs fest gespannt werden, wobei durchaus auch mehrere Werkstücke in ihrer Längsrichtung nacheinander angeordnet werden können.

Erfindungsgemäß weist ein Spannelement zumindest ein Paar Spannbacken mit zwei Spannbacken auf, wobei zumindest einer der Spannbacken relativ zu dem anderen Spannbacken verlagerbar ist. Dadurch kann zumindest ein Werkstück sicher zwischen den Spannbacken gespannt werden. Dabei sind die Spannelemente derart beabstandet angeordnet, dass auch zwischen zwei Spannelementen eine Endenbearbeitung an einer Schmalseite eines Werkstücks vornehmbar ist. Dabei ist es vorteilhaft, wenn das Werkstück insbesondere über die volle Höhe des Werkstücks an seiner oder an seinen Schmalseiten bearbeitbar ist. Der Abstand der Spannelemente ist dabei vorteilhaft so groß, dass ein Werkzeug, wie beispielsweise ein Fräskopf, zwischen den Spannelementen durchfahren kann, um mit einem Arbeitsgang oder mit zwei oder mehreren Arbeitsgängen die Schmalseite des Werkstücks bearbeiten und über die volle Höhe des Werkstücks profilieren zu können. Dies bedeutet, dass zwischen zwei Spannelementen ein entsprechendes Werkzeug verfahrbar ist, weil der Abstand der Spannelemente groß genug ist für das Durchfahren und das Bearbeiten des Werkstücks mittels des Werkzeugs. Der Abstand der Spannelemente ist vorteilhaft zwischen 200 und 800 mm, insbesondere zwischen 300 und 700 mm und weiter vorteilhaft zwischen 400 und 500 mm, so dass ein Fräskopf von etwa 90 bis 200 mm noch zwischen den Spannelementen hindurchfahren kann, um das Werkstückende an einer Schmalseite bearbeiten zu können.

Erfindungsgemäß weist ein Spannelement zwei Paar Spannbacken mit jeweils zwei Spannbacken auf, wobei jeweils zumindest einer der Spannbacken eines Paares relativ zu dem anderen Spannbacken des Paars verlagerbar ist. Dabei ist es vorteilhaft, wenn die verlagerbaren Spannbacken miteinander verbunden und gemeinsam verlagerbar sind. Alternativ können die verlagerbaren Spannbacken unabhängig voneinander verlagerbar ausgebildet sein.

Kurze Werkzeuge können vorteilhaft auch nur mit einem Spannelement gehalten werden, so dass das Werkstück zumindest an einer seiner Längsseiten, an einer Schmalseite und optional auch an einer zweiten Schmalseite bearbeitbar ist. Längere Werkstücke können hingegen auch von zwei oder mehr Spannelementen gespannt werden.

Auch ist es vorteilhaft, wenn die Spannbacken eines Paares jeweils in einer Richtung senkrecht zur Längsrichtung abragen. So kann ein Werkstück mit einer Längsseite eingespannt werden, während die andere Längsseite des Werkstücks bearbeitet werden kann.

Erfindungsgemäß ragen die Spannbacken eines ersten Paares in einer ersten Richtung senkrecht zur Längsrichtung ab, wobei die Spannbacken eines zweiten Paares in die der ersten Richtung entgegengesetzte Richtung senkrecht zur Längsrichtung abragen. So werden zwei Einspannbereiche geschaffen, die in Längsrichtung des Werkstücks bzw. des Werkstücktischs benachbart zueinander liegen, was ein einfaches Umspannen zwischen den Einspannbereichen erlaubt.

Auch ist es vorteilhaft, wenn die Zuführvorrichtung mittels zumindest einer Vorschubeinheit, vorzugsweise mittels zweier Vorschubeinheiten, in den beiden Richtungen verlagerbar ist. So kann eine unabhängige Verlagerung in den beiden Richtungen durchgeführt werden.

Gemäß des erfindungsgemäßen Gedankens ist es zweckmäßig, wenn mittels der Zuführvorrichtung zumindest ein Werkstück zu zumindest einem der Werkstücktische derart zuführbar ist, dass ein Werkstück oder eine Mehrzahl von Werkstücken gleichzeitig von einem der Werkstücktische haltbar ist. Die Zuführvorrichtung dient dabei dazu, dass nacheinander Werkstücke zu dem einen oder zu dem anderen Werkstücktisch zugeführt werden können, um eine hohe Effektivität zu erreichen. Während zumindest ein Werkstück oder zwei oder mehr Werkstücke in dem einen Werkstücktisch eingespannt ist bzw. sind und damit verfahren wird bzw. werden und mittels eines Werkzeugs bearbeitet wird bzw. werden, kann die Zuführvorrichtung parallel dazu zumindest ein Werkstück oder zwei oder mehr Werkstücke zu einem anderen Werkstücktisch transportieren und dort positionieren, damit es oder sie mit diesem Werkstücktisch verfahren und entsprechend bearbeitet werden kann bzw. können. Dabei erfolgt vorteilhaft ein Umspannen des zumindest einen Werkstücks in dem jeweiligen Werkstücktisch selbst und nicht von einem Werkstücktisch zu einem anderen Werkstücktisch, so dass die Bearbeitung von Werkstücken in dem jeweiligen Werkstücktisch autark erfolgt und keine Einbeziehung mehrerer Werkstücktische für die Bearbeitung eines einzelnen Werkstücks nötig ist.

Dabei ist es auch vorteilhaft, wenn mittels der Zuführvorrichtung gleichzeitig mehr als ein Werkstück, also zwei Werkstücke oder mehr, zu zumindest einem der Werkstücktische derart zuführbar sind, dass eine Mehrzahl von Werkstücken gleichzeitig von einem der Werkstücktische haltbar ist. Dabei können die mehreren Werkstücke gleichzeitig in den Werkstücktisch zugeführt werden oder auch nacheinander.

Auch ist es vorteilhaft, wenn die Zuführvorrichtung eine Anzahl von Spannelementen aufweist, die in der Längsrichtung der Zuführvorrichtung beabstandet zueinander angeordnet sind. So kann auch ein längeres Werkstück sicher gehalten werden, damit es während der Zuführung nicht verrutscht. Dabei können die Spannelemente auch derart angeordnet sein, dass mehrere Werkstücke sicher angeordnet werden können, wie in ihrer Längsrichtung nacheinander, so dass sie gleichzeitig von der Zuführvorrichtung dem Werkstücktisch zugeführt werden können.

So ist es auch vorteilhaft, wenn ein Spannelement zumindest ein Paar Spannbacken mit zwei Spannbacken aufweist, wobei zumindest einer der Spannbacken relativ zu dem anderen Spannbacken verlagerbar ist. Dadurch kann ein Werkstück zwischen den Spannbacken eingespannt und somit festgehalten werden, um von der Zuführvorrichtung gehalten und verfahren zu werden. Die Zuführvorrichtung erlaubt somit das Aufnehmen und Transportieren zumindest eines Werkstücks zu einem der Werkstücktische vorzunehmen bzw. von einem Werkstücktisch zumindest ein Werkstück zu entnehmen und abzutransportieren.

Auch ist es vorteilhaft, wenn ein Spannelement zwei Paar Spannbacken mit jeweils zwei Spannbacken aufweist, wobei jeweils zumindest einer der Spannbacken eines Paares relativ zu dem anderen Spannbacken des Paares verlagerbar ist. Dadurch kann ein gezieltes Spannen zumindest eines Werkstücks erfolgen. Das Verlagern erfolgt dabei beispielsweise pneumatisch, hydraulisch oder elektromotorisch, was einfach darzustellen ist und dauerhaft betriebssicher ist.

Dabei ist es auch vorteilhaft, wenn die Spannbacken eines Paares jeweils in einer Richtung senkrecht zur Längsrichtung der Zuführvorrichtung abragen. Dadurch können längs der Zuführvorrichtung auch längere Werkstücke gegriffen und einem Werkstücktisch zugeführt werden oder es können längs der Zuführvorrichtung mehrere Werkstücke gegriffen und einem Werkstücktisch zugeführt werden.

Bei einem weiteren Ausführungsbeispiel der Erfindung ist es zweckmäßig, wenn die Spannbacken eines ersten Paares in einer ersten Richtung senkrecht zur Längsrichtung abragen, wobei die Spannbacken eines zweiten Paares in eine der ersten Richtung entgegengesetzte Richtung senkrecht zur Längsrichtung abragen. Dadurch können mittels der Zuführvorrichtung auf gegenüberliegenden Längsseiten der Zuführvorrichtung jeweils Werkstücke oder andere Elemente gegriffen und gehalten werden.

Auch ist es zweckmäßig bei einem vorteilhaften Ausführungsbeispiel einer Bearbeitungsvorrichtung, wenn die Zuführvorrichtung zumindest in einem mittleren Bereich, in Längsrichtung betrachtet, Spannbackenpaare aufweist, die beabstandet zueinander und in Längsrichtung feststehend zueinander angeordnet sind. So kann das jeweilige Werkstück fest eingespannt werden und es können die Abstände der Spannbackenpaare so gewählt werden, dass Werkstücke mit typischen Werkstücklängen sicher gehalten werden können. Es kann gegebenenfalls auch eine Werkstückbearbeitung an einer Schmalseite erfolgen, wenn ein Werkzeug zwischen zwei benachbarten Spannbackenpaaren verfahrbar ist.

Auch ist es zweckmäßig, wenn die Zuführvorrichtung zumindest an einem ihrer Endbereiche, in Längsrichtung betrachtet, zumindest ein Spannbackenpaar aufweist, das in Längsrichtung verlagerbar angeordnet ist. Dadurch kann insbesondere an den Enden der Zuführvorrichtung in ihrer Längsrichtung betrachtet der Abstand zweier benachbarter Spannbackenpaare zueinander eingestellt werden, um auch kürzere Werkstücke durch zumindest zwei Spannbackenpaare halten zu können. Vorteilhaft ist es auch, wenn die Zuführvorrichtung an beiden ihrer Endbereiche, in Längsrichtung betrachtet, zumindest ein Spannbackenpaar aufweist, das in Längsrichtung verlagerbar angeordnet ist.

Besonders vorteilhaft ist es dabei, wenn die Zuführvorrichtung zumindest an einem ihrer Endbereiche, oder auch an ihren beiden Endbereichen, in Längsrichtung betrachtet, zumindest zwei Spannbackenpaare aufweist, die in Längsrichtung verlagerbar angeordnet sind. Dadurch können kurze Werkstücke besonders gut gehalten und von der Zuführvorrichtung dem jeweiligen Werkstücktisch zugeführt werden.

Auch ist es vorteilhaft, wenn das verlagerbare Spannbackenpaar oder die verlagerbaren Spannbackenpaare der Zuführvorrichtung in ihrer Position in Längsrichtung einstellbar und feststellbar ist bzw. sind. Dadurch kann manuell oder alternativ automatisiert der Abstand der verlagerbaren Spannbackenpaare eingestellt werden.

Besonders vorteilhaft ist es, wenn das verlagerbare Spannbackenpaar oder dass die verlagerbaren Spannbackenpaare mittels einer Antriebseinheit verlagerbar ist bzw. sind. So kann die Verlagerung pneumatisch, hydraulisch oder elektromotorisch vorgenommen werden mittels eines pneumatischen, hydraulischen oder elektromotorischen Aktuators.

Gemäß einem weiteren Aspekt ist es zweckmäßig, wenn einer der Spannbacken relativ zum anderen Spannbacken verdrehbar ist, wie insbesondere um 90°. So ist es insbesondere vorteilhaft, wenn die obere Spannbacke verdrehbar ist, um das Werkstück dort zur Bearbeitung frei zu geben. Die Verdrehung kann vorteilhaft beispielsweise um 90° erfolgen.

Die Aufgabe zu dem Verfahren wird mit den Merkmalen von Anspruch 5 gelöst.

Ein Ausführungsbeispiel der Erfindung betrifft ein Verfahren zum Betreiben einer Bearbeitungsvorrichtung, insbesondere zum Bearbeiten von Werkstücken aus Holz, Holzwerkstoffen, Kunststoff oder dergleichen, mit einem Werkstücktisch mit einer Werkstückhalterung zum Halten zumindest eines Werkstücks und mit einer Zuführvorrichtung zum Zuführen zumindest eines Werkstücks zum Werkstücktisch, wobei das Werkstück mittels der Zuführvorrichtung zum Werkstücktisch geführt und auf ihm positioniert wird, wobei das Werkstück in drei Dimensionen hinsichtlich des Werkstücktischs positioniert wird.

Gemäß der Erfindung ist es zweckmäßig, wenn der Werkstücktisch in seiner Längsrichtung relativ zur Zuführvorrichtung verlagert wird und die Zuführvorrichtung in zwei Richtungen relativ zum Werkstücktisch verlagert wird, um ein Werkstück zum Zuführtisch zu positionieren.

Weiterhin ist es vorteilhaft, wenn ein Werkstück in der Werkstückhalterung des Werkstücktischs einspannbar ist. Auch können mehrere Werkstücke in Längsrichtung nebeneinander eingespannt werden.

Weiterhin ist es vorteilhaft, wenn die Werkstückhalterung Paare von Spannbacken aufweist, mittels welchen ein Werkstück in der Werkstückhalterung des Werkstücktischs einspannbar ist.

Besonders vorteilhaft ist es, wenn die Werkstückhalterung zumindest zwei Sätze von Paaren von Spannbacken aufweist, mittels welchen ein Werkstück in der Werkstückhalterung des Werkstücktischs einspannbar ist, wobei das Werkstück von einem ersten Satz von Paaren zu einem zweiten Satz von Paaren umsetzbar ist.

Weiterhin ist es auch vorteilhaft, wenn das Werkstück nach einem Einspannen in der Werkstückhalterung mittels zumindest eines Werkzeugs an einer Längsseite bearbeitet wird.

Gemäß der Erfindung ist es auch vorteilhaft, wenn das Werkstück nach einem Einspannen in der Werkstückhalterung mittels zumindest eines Werkzeugs an einer Schmalseite mit einer Endenbearbeitung bearbeitet wird.

Dabei ist es besonders vorteilhaft, wenn das Werkstück nach einem Einspannen in der Werkstückhalterung mittels zumindest eines Werkzeugs an beiden Schmalseiten mit einer Endenbearbeitung bearbeitet wird. So kann eine besonders effektive Bearbeitung erreicht werden.

Dabei ist es besonders vorteilhaft, wenn das Werkstück nach einer Bearbeitung des Werkstücks unter Einspannung in einen Satz Spannbacken in den zweiten Satz Spannbacken umgespannt wird zur weiteren Bearbeitung des Werkstücks, insbesondere an einer zweiten Längsseite und/oder an zumindest einer der Schmalseiten.

Auch ist es vorteilhaft, wenn das Werkstück nach der Bearbeitung von der Zuführvorrichtung vom Werkstücktisch entfernt wird.

Besonders vorteilhaft ist es auch, wenn mittels der Zuführvorrichtung mit zumindest einzelnen seiner Spannbackenpaare von einem Werkstück eine Glasleiste oder ein anderes Element entnehmbar ist.

So ist es auch vorteilhaft, wenn mittels der Zuführvorrichtung mit zumindest einzelnen seiner Spannbackenpaare an ein Werkstück ein Beschlag, ein RFID-Chip oder ein anderes Element zuführbar ist.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Zeichnungen näher erläutert. Es zeigen:
- Figur 1: eine schematische Darstellung eines Ausschnitts einer Bearbeitungsvorrichtung,
- Figur 2: eine schematische Darstellung einer Bearbeitungsvorrichtung,
- Figur 3: eine Schnittdarstellung durch eine Werkstückhalterung,
- Figur 4: eine Schnittdarstellung durch eine Werkstückhalterung in einer anderen Betriebsstellung,
- Figur 5: eine Schnittdarstellung durch eine Werkstückhalterung in einer anderen Betriebsstellung,
- Figur 6: eine Schnittdarstellung durch eine Werkstückhalterung in einer anderen Betriebsstellung,
- Figur 7: eine Schnittdarstellung durch eine Werkstückhalterung in einer anderen Betriebsstellung,
- Figur 8: eine schematische Darstellung eines Ausführungsbeispiels einer Bearbeitungsvorrichtung,
- Figur 9: eine schematische Darstellung eines Ausschnitts der Bearbeitungsvorrichtung nach Figur 8,
- Figur 10: eine Darstellung einer Zuführvorrichtung, und
- Figur 11: eine Darstellung eines Werkstücks in der Einspannung eines Spannelements eines Werkstücktischs im Schnitt.

### Bevorzugte Ausführung der Erfindung

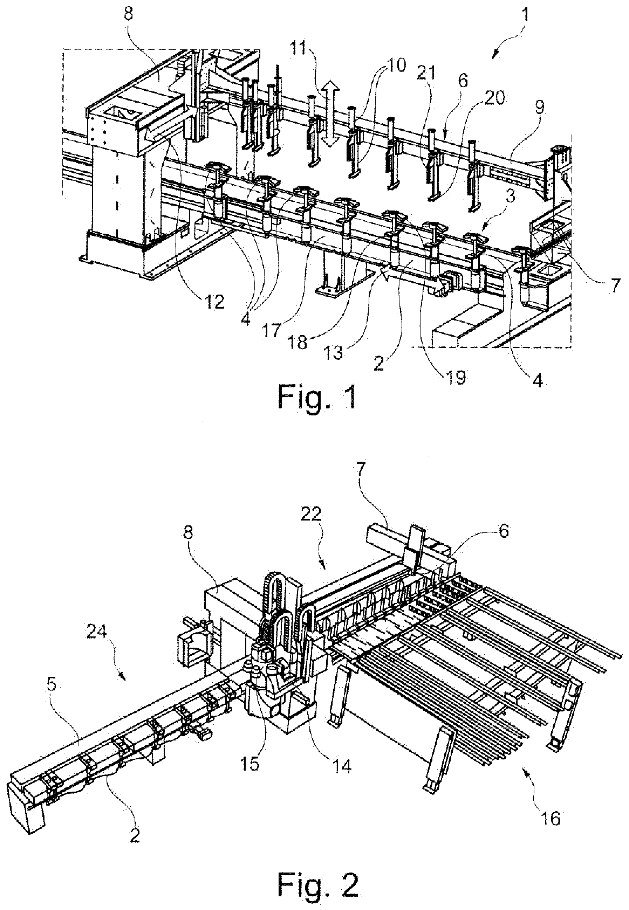

Die Figuren 1 und 2 zeigen eine Bearbeitungsvorrichtung 1, insbesondere zum Bearbeiten von Werkstücken 5 aus Holz, Holzwerkstoffen, Kunststoff oder dergleichen. Dabei können die Werkstücke 5 beispielsweise eher längliche, balkenartige Werkstücke oder eher flache, eher zweidimensionale, brettartige Werkstücke sein.

Die Bearbeitungsvorrichtung 1 weist einen Werkstücktisch 2 mit einer Werkstückhalterung 3 mit Spannelementen 4 zum Spannen eines Werkstücks 5 auf, mittels welcher Werkstücke 5 zur Bearbeitung sicher gehalten werden können. Der Werkstücktisch 2 ist bevorzugt mit einer Vorschubeinheit verbunden ausgebildet, mittels welcher der Werkstücktisch 2 in Richtung 13 verlagerbar ausgebildet ist. Dabei ist die Richtung 13 vorteilhaft senkrecht zur Richtung 11 und zur Richtung 12 ausgerichtet.

Weiterhin ist eine Zuführvorrichtung 6 vorgesehen, welche dazu dient, ein Werkstück 5 der Werkstückhalterung 3 des Werkstücktischs 2 zuzuführen und das Werkstück 5 auf dem Werkstücktisch 2 zu platzieren.

Weiterhin ist ein Vorrichtungsgestell 7 vorgesehen, an welchem die Zuführvorrichtung 6, auch Manipulator genannt, verlagerbar angeordnet ist. Auch ist eine Führungsvorrichtung 8 vorgesehen, an welcher die Zuführvorrichtung 6 weiterhin verlagerbar angelenkt ist. So ist die Zuführvorrichtung 6 an einer Seite an dem Vorrichtungsgestell 7 und an der anderen Seite an der Führungsvorrichtung 8 verlagerbar angeordnet. Dabei kann die Zuführvorrichtung 6 mit ihrem länglichen Trägerelement 9 und den daran angeordneten Spannelementen 10 sowohl in der vertikalen Richtung 11 als auch in der lateralen Richtung 12, die senkrecht zur Richtung 11 ausgerichtet ist, bewegt werden.

Die Führungsvorrichtung 8 ist vorteilhaft als Portal oder als Traverse ausgebildet, an welcher ein Werkzeugschlitten 14 verlagerbar angeordnet ist, um ein Werkzeug 15 in Richtung 12 und/oder in Richtung 11 verlagern zu können. Dadurch kann das Werkstück 5 in Längsrichtung des Werkstücktischs 2 verlagert werden und dabei an dem Werkzeug 15 zur Bearbeitung vorbeigeführt werden.

Weiterhin kann noch ein Zuführ- und/oder Auslauftisch 16 vorgesehen sein, mittels welchem die Werkstücke 5 zugeführt und/oder abgeführt werden können, so dass der Bearbeitungsvorrichtung 1 ein Vorrat an Werkstücken 5 zur Verfügung gestellt werden kann, um diese effizient bearbeiten zu können bzw. diese von der Bearbeitungsvorrichtung 1 wieder abführen und einer weiteren Bearbeitung oder Kommissionierung zuführen zu können.

Gemäß der Erfindung wird ein Spannen der Werkstücke 5 bei 3-dimensionaler Verlagerung bzw. Positionierung vorgesehen. Dafür werden für das so genannte 3-dimensionale Spannen der Werkstücke 5 drei Achsen bzw. drei Manipulationsrichtungen in x-, y- und in z-Richtung vorgesehen. Dabei repräsentiert die x-Richtung die Richtung 13, die y-Richtung die Richtung 12 und die z-Richtung die Richtung 11.

Die Bearbeitungsvorrichtung 1 der Figuren 1 und 2 stellt eine Vorrichtung dar, bei welcher die Werkstücke 5 relativ zum Werkstücktisch 2 entlang der drei genannten Achsen verlagert werden können und so die Einspannung des Werkstücks 5 derart vorgenommen werden kann, dass es bei dem Übergang von einer Einspannung zu einer zweiten Einspannung in den genannten Richtungen verlagert werden kann.

Dabei werden die verschiedenen Möglichkeiten der Verlagerung des Werkstücks 5 relativ zum Werkstücktisch 2 zur Erreichung eines attraktiven und insbesondere auch wirtschaftlichen Vorrichtungskonzepts auf den Werkstücktisch 2 und die Zuführvorrichtung 6 verteilt. Dabei sind grundsätzlich verschiedene Kombinationsmöglichkeiten zur Verteilung der Verlagerungsmöglichkeiten entlang der genannten Richtungen 11, 12 und 13 möglich.

Die Figuren 1 und 2 zeigen eine Bearbeitungsvorrichtung 1, bei welcher folgende Kombination von Zuordnungen der Richtungen umgesetzt ist:
Verlagerung entlang der x-Achse: Werkstücktisch,
Verlagerung entlang der y-Achse: Zuführvorrichtung und
Verlagerung entlang der z-Achse: Zuführvorrichtung.

Der Werkstücktisch 2 ist dabei bevorzugt als länglich ausgebildeter Tisch mit einem entsprechend länglich ausgebildeten Grundkörper 17 ausgebildet, an welchem die Werkstückhalterung 3 mit den benachbart zueinander angeordneten Spannelementen 4 angeordnet ist. Die Spannelemente 4 sind entlang der x-Richtung 13 benachbart zueinander angeordnet, so dass ein Werkstück 5 mit den Spannelementen 4 gehalten werden kann, wobei das Werkstück 5 entlang der x-Richtung 13 orientiert von den Spannelementen 4 gehalten werden kann. Da der Werkstücktisch 2 mit seiner Vorschubeinrichtung in x-Richtung 13 verlagerbar ist, ist auch die damit verbundene Werkstückhalterung 3 in x-Richtung verlagerbar und damit sind auch die Spannelemente 4 in x-Richtung verlagerbar. Dadurch kann vor der Positionierung des Werkstücks 5 in den Spannelementen 4 des Werkstücktischs 2 der Werkstücktisch 2 in x-Richtung 13 verlagert werden, um die Position des Werkstücks 5 in x-Richtung 13 relativ zum Werkstücktisch 2 zu definieren.

Die Spannelemente 4 bestehen aus zwei zueinander verlagerbaren Spannbacken 18, 19, die in z-Richtung verlagerbar sind, um zwischen sich ein Werkstück 5 zu klemmen. Alternativ können auch andere Spannelemente vorgesehen sein. Die Spannbacken 18, 19 stehen dabei in y-Richtung 12 vor, um zwischen sich ein Werkstück 5 einklemmen zu können. Dabei ist es vorteilhaft, wenn die Spannbacken 18, 19 derart ausgebildet sind, dass die Spannbacken 18, 19 paarweise derart angeordnet sind, dass sie in beiden y-Richtungen vorstehend angeordnet sind, so dass zwei Aufspannungen zwischen den beiden Spannbackenpaaren 18, 19 möglich sind.

Der Abstand zwischen benachbarten Spannelementen 4 kann dabei vorteilhaft so ausreichend groß gewählt werden, um auch eine Endenbearbeitung an einer Schmalseite oder vorteilhaft auch an beiden Schmalseiten des Werkstücks 5, also an den kurzen Werkstückseiten, zwischen zwei benachbarten Spannelementen 4 und die Längsbearbeitung einer Längsseite des Werkstücks 5 in einer Aufspannung durchführen zu können.

Die Zuführvorrichtung 6 weist ebenfalls einen länglichen Grundkörper bzw. ein längliches Trägerelement 9 auf, an welchem die Spannelemente 10 mit zwei in y-Richtung 12 vorstehenden Spannbacken 20, 21, die in z-Richtung 11 verlagerbar sind, benachbart und beabstandet zueinander angeordnet sind. Die Zuführvorrichtung 6 ist selbst in y-Richtung und in z-Richtung verlagerbar ausgebildet. Dadurch lassen sich die Werkstücke 5 sowohl beim Einlegen in die Spannbacken 18, 19 der Werkstückhalterung 3 als auch beim Umspannen zwischen den Bearbeitungen von einem Spannbackenpaar zu dem anderen Spannbackenpaar in x-, y- und in z-Richtung relativ zur den Spannbacken 18, 19 versetzen.

Dabei ist es auch möglich, dass in x-Richtung mehrere Werkstücke 5 nebeneinander angeordnet werden und gleichzeitig in den Spannbacken 18, 19 eingespannt werden, so dass sie gleichzeitig bearbeitet werden können.

Mit der Zuführvorrichtung 6 können die einzelnen Werkstücke 5 gleichzeitig nebeneinander aufgenommen werden, so dass auch deren Position gleichzeitig in x-, y- und in z-Richtung verändert werden kann.

Beim Einlegen von Werkstücken 5 kann dabei bereits eine am Rohteil vorgenommene Bearbeitung berücksichtigt werden, wie beispielsweise vorher ausgetrennte Glasleisten, so dass das Werkstück 5 gegebenenfalls bereits in einem vorhandenen Falz eingespannt werden kann, statt an der Ober- und Unterseite des Werkstücks 5.

Durch den Versatz der Werkstücke 5, können auch Teile mit negativer Spannbrücke nach unten versetzt aufgenommen und eingespannt werden. Normalerweise werden die Teile in der Klemmeinrichtung an der Ober- und Unterseite gespannt. Die Überlappung der beiden Spannflächen ist die sog. Spannbrücke. Der Trend geht hin zu Profilen mit sehr kleiner, keiner oder sogar negativer Spannbrücke. Hier gibt es keine Überlappung der Ober- und Unterseite. Das Werkstück 5 muss dann im Falz gespannt werden.

Die erfindungsgemäße Vorrichtung kann vorteilhaft wie nachfolgend beschrieben verwendet werden.

Das Werkstück 5 wird beispielsweise als Rohteil von der Zuführvorrichtung 6 von der Abholposition des Werkstückeinlaufs am Zuführtisch 16 aufgenommen.

Anschließend wird das Werkstück 5 mittels der Zuführvorrichtung 6 für die erste Aufspannung in die Spannbacken 18, 19 der Werkstückhalterung eingelegt. Die Lage des Werkstücks 5 kann dabei in y- und z-Richtung variabel ausgerichtet werden, je nach den beabsichtigten durchzuführenden Bearbeitungen an dem Werkstück 5, wobei die y- und z-Ausrichtung durch die Verlagerung der Zuführvorrichtung 6 entlang der Achsen der Zuführvorrichtung 6 gewählt werden kann.

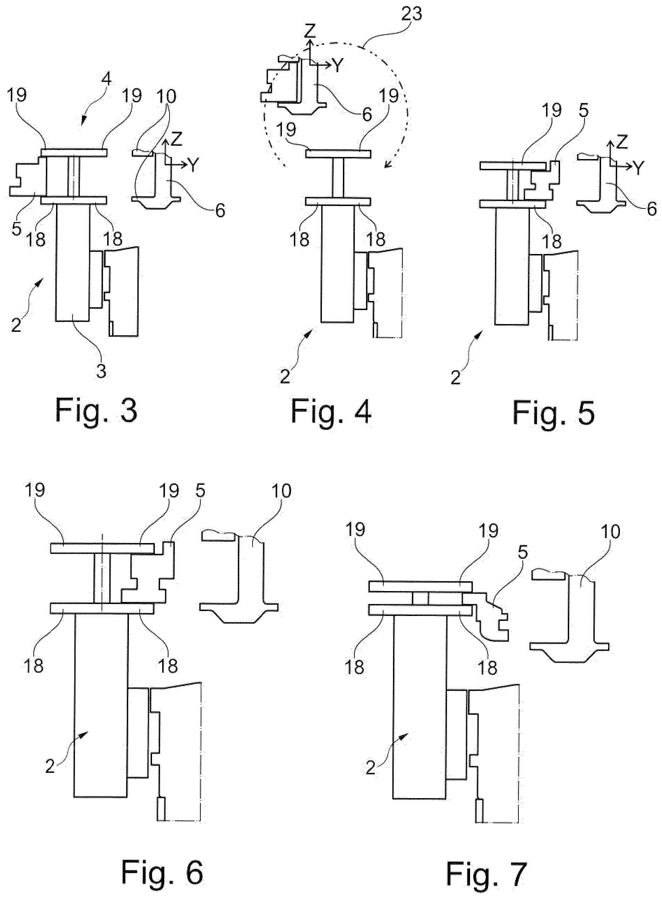

Die Figur 3 zeigt ein Spannelement 4 der Werkstückhalterung 3. Dabei sind zwei Paare von Spannbacken 18, 19 vorgesehen, wobei auf der linken Seite des Spannelements 4 ein Werkstück 5 zwischen den Spannbacken 18, 19 aufgenommen dargestellt ist.

Mit den Spannelementen 10 der Zuführvorrichtung 6 kann das Werkstück 5 gegriffen und in die gezeigte Aufspannung eingesetzt werden. Dabei können die Spannbacken 18, 19 das Werkstück 5 greifen und spannen.

Der Werkstücktisch 2 kann dabei mittels einer Vorschubeinrichtung in x-Richtung verfahren werden, insbesondere in den Bearbeitungsbereich 24, um das Werkstück 5 mittels eines Werkzeugs 15 zu bearbeiten, wie beispielsweise eine Längsprofilierung durchzuführen, eine Endenbearbeitung und/oder eine Bohrbearbeitung vorzunehmen.

Anschließend fährt der Werkstücktisch 2 in x-Richtung wieder zurück in den Beschickbereich 22, in welchem die Zuführeinrichtung das Werkstück 5 einsetzt, umspannt und/oder wieder entnimmt.

Das Werkstück 5 wird von der Zuführvorrichtung 6 aus den Spannbacken 18, 19 entnommen und mittels Verlagerung in y- und z-Richtung von der linken Seite der Spannbacken 18, 19, siehe Figur 4, zur rechten Seite der Spannbacken 18, 19 gemäß Pfeil 23 verlagert. Es wird das Werkstück 5 auf der rechten Seite der Spannbacken 18, 19 in die Spannbacken 18, 19 geführt und dort für die zweite Aufspannung eingelegt und gespannt, siehe Figur 5. Je nach gewünschter Bearbeitung kann das Werkstück 5 auch mit einem Versatz in x-Richtung in die Spannbacken 18, 19 eingeführt werden, beispielsweise um eine Bohrbearbeitung von oben zu ermöglichen, falls in der ersten Aufspannung eine Spannzange diesen Bereich verdeckt hat und daher das Bohren nicht möglich war.

Das Werkstück 5 kann entsprechend variabel in x-, y- und/oder z-Richtung positioniert und in die Spannbacken 18, 19 eingelegt werden.

Anschließend verfährt der Werkstücktisch 2 wieder in x-Richtung in den Bearbeitungsbereich 24, um das Werkstück 5 an der zweiten Längsseite zu profilieren und gegebenenfalls auch noch weitere Bearbeitungen durchzuführen.

Danach verfährt der Werkstücktisch 2 wieder in den Beschickbereich 22 und das fertig bearbeitete Werkstück 5 kann durch die Zuführvorrichtung 6 entnommen und auf der Ablegeposition am Werkstückauslauf abgelegt werden.

Die oben beschriebene Vorrichtung hat den Vorteil, dass vielfältige Spannmöglichkeiten vorgesehen sein können, um das Werkstück 5 zu spannen und zu bearbeiten. Dies wird vorteilhaft durch die Verlagerbarkeit des Werkstücks 5 in den drei Richtungen x-Richtung, y-Richtung und z-Richtung erreicht.

Dadurch können die bei früheren Vorrichtungen für die Einspannung benötigten Ober- und/oder Unterseiten beim Umspannen zur Durchführung von Bearbeitungen freigegeben werden, um eine Bearbeitung zu erlauben, welche die Ober- oder Unterseite des Werkstücks 5 derart bearbeitet, dass die Ober- oder Unterseite nur bis auf kleine Stege belassen wird oder auch gänzlich aufgelöst wird.

Dadurch ergibt sich eine Minimierung der Neben- und/oder Handlingszeiten, da auch mehrere Werkstücke 5 gleichzeitig positioniert und bearbeitet werden können. Dies kann bei einer maximalen Präzision bei der Teilefertigung durchgeführt werden.

Bevorzugt ist, wenn die Zuführvorrichtung 6 mit einer Mehrzahl von Spannelementen 10 ausgestattet ist, die nebeneinander in x-Richtung beabstandet zueinander angeordnet sind. Dabei sind zumindest die mittleren Spannelemente 10 in einem vorteilhaft festen und eher langgezogenen Raster beabstandet angeordnet.

Vorteilhaft ist es dabei, wenn an mindestens einem lateralen Ende der Zuführvorrichtung 6 mindestens ein Spannelement 10 in x-Richtung verlagerbar angeordnet ist. Dadurch kann der Abstand der Spannelemente 10 verändert werden, um an die Länge eines Werkstücks 5 angepasst zu werden.

Die Figuren zeigen, dass die Werkstücke 5 horizontal nebeneinander in verschiedenen Positionen von den beiden Spannbackenpaaren eines Werkstücktisches gehalten werden können.

Zur Zuführung können alternativ zumindest zwei Zuführtische in der Weise vorgesehen sein, so dass die Fertigteile und die Rohteile übereinander platziert werden können.

Auch kann eine Ausrichtstation vorgesehen sein, mittels welcher die Werkstücke ausgerichtet und insbesondere auch gerade gedrückt werden können, wie insbesondere auch in x-Richtung.

Auch ist es möglich, dass bei einem Ausführungsbeispiel der Erfindung eine Doppelzuführvorrichtung vorgesehen ist, mittels welcher zeitgleich auch zwei Werkstücke zugeführt und in die Spannbacken eingesetzt werden können.

Auch kann eine Anzeige einer Doppelbelegungsbestückung vorgesehen sein, insbesondere für die manuelle Werkstückbeschickung der Vorrichtung.

Die Figuren 6 und 7 zeigen weitere Darstellungen, wie ein Werkstück 105 mittels der Spannbacken gespannt werden kann, wobei das Werkstück 105 nicht an der Oberseite und an der Unterseite eingespannt wird, sondern an Flächen, die benachbart zur Ober- bzw. Unterseite angeordnet sind.

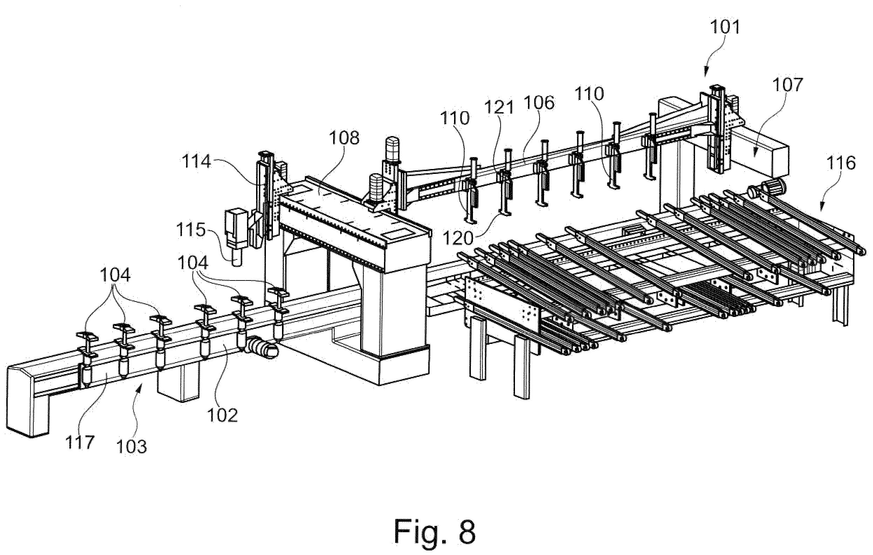

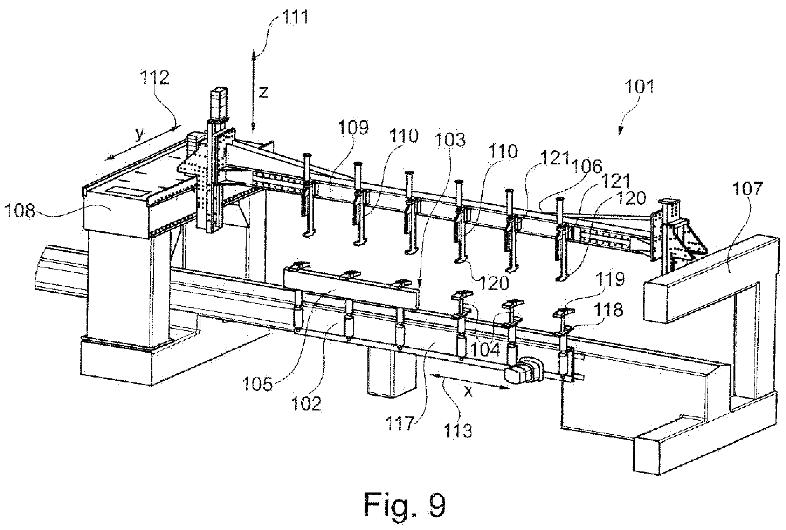

Die Figuren 8 und 9 zeigen ein weiteres Ausführungsbeispiel einer Bearbeitungsvorrichtung 101, insbesondere zum Bearbeiten von Werkstücken 105 aus Holz, Holzwerkstoffen, Kunststoff oder dergleichen. Dabei können die Werkstücke 105 beispielsweise eher längliche, balkenartige Werkstücke 105 oder eher flache, eher zweidimensionale, brettartige Werkstücke 105 sein.

Die Bearbeitungsvorrichtung 101 weist einen Werkstücktisch 102 mit einer Werkstückhalterung 103 mit Spannelementen 104 zum Spannen eines Werkstücks 105 auf, mittels welcher Werkstücke 105 zur Bearbeitung sicher gehalten werden können. Der Werkstücktisch 102 ist bevorzugt mit einer Vorschubeinheit verbunden ausgebildet, mittels welcher der Werkstücktisch 102 in seiner Längsrichtung in Richtung 113 verlagerbar ausgebildet ist. Dabei ist die Richtung 113 vorteilhaft senkrecht zur Richtung 111 und zur Richtung 112 ausgerichtet.

Weiterhin ist eine Zuführvorrichtung 106 vorgesehen, welche dazu dient, ein Werkstück 105 der Werkstückhalterung 103 des Werkstücktischs 102 zuzuführen und das Werkstück 105 auf dem Werkstücktisch 102 zu platzieren.

Weiterhin ist ein Vorrichtungsgestell 107 vorgesehen, an welchem die Zuführvorrichtung 106, auch Manipulator genannt, verlagerbar angeordnet ist. Auch ist eine Führungsvorrichtung 108 vorgesehen, an welcher die Zuführvorrichtung 106 weiterhin verlagerbar angelenkt ist. So ist die Zuführvorrichtung 106 an einer Seite an dem Vorrichtungsgestell 107 und an der anderen Seite an der Führungsvorrichtung 108 verlagerbar angeordnet. Die Führungsvorrichtung 108 dient auch dazu, Werkzeuge 115 mit einem Werkzeugschlitten 114 an ihr verlagerbar anzuordnen und zu führen. Dabei wird das zumindest eine Werkzeug 115 an einer Seite der Führungsvorrichtung 108 gelagert, während die Zuführvorrichtung 106 an der anderen Seite der Führungsvorrichtung 108 verlagerbar gelagert ist. Alternativ kann benachbart zu der Führungsvorrichtung 108 auch ein zweites Vorrichtungsgestell 107 angeordnet sein, so dass die Zuführvorrichtung 106 mittels zweier Vorrichtungsgestelle verlagerbar geführt ist. Dann ist es auch vorteilhaft, wenn an der Führungsvorrichtung 108 beiderseitig Werkzeuge 115 beispielsweise mittels Werkzeugschlitten 114 verlagerbar angeordnet sind.

Es kann die Zuführvorrichtung 106 mit ihrem länglichen Trägerelement 109 und den daran angeordneten Spannelementen 110 sowohl in der vertikalen Richtung 111 als auch in der lateralen Richtung 112, die senkrecht zur Richtung 111 ausgerichtet ist, bewegt werden.

Die Spannelemente 110 sind dabei beabstandet zueinander angeordnet. Vorteilhaft sind die Spannelemente 110 der Zuführvorrichtung 106 fest zueinander angeordnet oder in einem anderen Ausführungsbeispiel sind zumindest ein Spannelement oder zwei oder mehr Spannelemente 110 der Zuführvorrichtung 106 an einem Endbereich der Zuführvorrichtung verlagerbar angeordnet, alternativ an beiden Endbereichen der Zuführvorrichtung 106.

Die Führungsvorrichtung 108 ist vorteilhaft als Portal oder als Traverse ausgebildet, an welcher ein Werkzeugschlitten 114 verlagerbar angeordnet ist, um ein Werkzeug 115 in Richtung 112 und/oder in Richtung 111 verlagern zu können. Dadurch kann das Werkstück 105 in Längsrichtung des Werkstücktischs 102 verlagert werden und dabei an dem Werkzeug 115 zur Bearbeitung vorbeigeführt werden.

Weiterhin kann noch ein Zuführ- und/oder Auslauftisch 116 vorgesehen sein, mittels welchem die Werkstücke 105 zugeführt und/oder abgeführt werden können, so dass der Bearbeitungsvorrichtung 101 ein Vorrat an Werkstücken 105 zur Verfügung gestellt werden kann, um diese effizient bearbeiten zu können bzw. diese von der Bearbeitungsvorrichtung 101 wieder abführen und einer weiteren Bearbeitung oder Kommissionierung zuführen zu können.

Die beiden Figuren 8 und 9 zeigen jeweils nur einen Werkstücktisch 102. Alternativ können auch zwei oder mehr Werkstücktische 102 parallel zueinander angeordnet und nebeneinander verlagerbar geführt sein. Dazu können die jeweiligen Werkstücktische 102 beispielsweise an einer Schiene geführt beabstandet zueinander verlagerbar sein.

Gemäß eines erfinderischen Gedankens wird ein Spannen der Werkstücke bei 3-dimensionaler Verlagerung bzw. Positionierung vorgesehen. Dafür werden für das so genannte 3-dimensionale Spannen der Werkstücke 105 drei Achsen bzw. drei Manipulationsrichtungen in x-, y- und in z-Richtung vorgesehen. Dabei repräsentiert die x-Richtung die Richtung 113, die y-Richtung die Richtung 112 und die z-Richtung die Richtung 111.

Die Bearbeitungsvorrichtung 101 der Figuren 8 und 9 stellt eine Vorrichtung dar, bei welcher die Werkstücke 105 einzeln oder zwei oder mehr Werkstücke 105 relativ zum Werkstücktisch 102 entlang der drei genannten Achsen verlagert werden können und so die Einspannung des Werkstücks 105 oder der mehreren Werkstücke derart vorgenommen werden kann, dass es bei dem Übergang von einer Einspannung zu einer zweiten Einspannung in den genannten Richtungen verlagert werden kann.

Dabei werden die verschiedenen Möglichkeiten der Verlagerung des Werkstücks 105 relativ zu einem Werkstücktisch 102 zur Erreichung eines attraktiven und insbesondere auch wirtschaftlichen Vorrichtungskonzepts auf den Werkstücktisch 102 und die Zuführvorrichtung 106 verteilt. Dabei sind grundsätzlich verschiedene Kombinationsmöglichkeiten zur Verteilung der Verlagerungsmöglichkeiten entlang der genannten Richtungen 111, 112 und 113 möglich.

Die Figuren 8 und 9 zeigen dabei eine Bearbeitungsvorrichtung 101, bei welcher folgende Kombination von Zuordnungen der Richtungen umgesetzt ist:
Verlagerung entlang der x-Achse: Werkstücktisch 102,
Verlagerung entlang der y-Achse: Zuführvorrichtung 106 und
Verlagerung entlang der z-Achse: Zuführvorrichtung 106.

Der einzelne Werkstücktisch 102 bzw. bei mehr als einem Werkstücktisch die jeweiligen Werkstücktische, ist bzw. sind dabei bevorzugt als länglich ausgebildeter Tisch mit einem entsprechend länglich ausgebildeten Grundkörper 117 ausgebildet, an welchem die Werkstückhalterung 103 mit den benachbart zueinander angeordneten Spannelementen 104 angeordnet ist. Die Spannelemente 104 sind entlang der x-Richtung 113 benachbart zueinander angeordnet, so dass ein Werkstück 105 mit den Spannelementen 104 gehalten werden kann, wobei das Werkstück 105 entlang der x-Richtung 113 orientiert von den Spannelementen 104 gehalten werden kann. Da der jeweilige Werkstücktisch 102 mit seiner Vorschubeinrichtung in x-Richtung 113 verlagerbar ist, ist auch die damit verbundene Werkstückhalterung 103 in x-Richtung verlagerbar und damit sind auch die Spannelemente 104 in x-Richtung verlagerbar. Dadurch kann vor der Positionierung des Werkstücks 105 in den Spannelementen 104 des Werkstücktischs 102 der jeweilige Werkstücktisch 102 in x-Richtung 113 verlagert werden, um die Position des Werkstücks 105 in x-Richtung 113 relativ zum Werkstücktisch 102 zu definieren.

Die Spannelemente 104 bestehen aus zwei zueinander verlagerbaren Spannbacken 118, 119, die in z-Richtung verlagerbar sind, um zwischen sich ein Werkstück 105 zu klemmen. Dabei kann es auch vorteilhaft sein, wenn beispielsweise die untere Spannbacke in z-Richtung feststehend ausgebildet ist und die obere Spannbacke dazu in z-Richtung verlagerbar ist. Alternativ können auch andere Spannelemente vorgesehen sein. Die Spannbacken 118, 119 stehen dabei in y-Richtung 112 vor, um zwischen sich ein Werkstück 105 einklemmen zu können. Dabei ist es vorteilhaft, wenn die Spannbacken 118, 119 derart ausgebildet sind, dass die Spannbacken 118, 119 paarweise derart angeordnet sind, dass sie in beiden y-Richtungen vorstehend angeordnet sind, so dass zwei Aufspannungen zwischen den beiden Spannbackenpaaren 118, 119 möglich sind.

Auch kann es vorteilhaft sein, wenn die oberen und/oder die unteren Spannbacken beispielsweise um 90° verdrehbar sind, um Platz für eine Bearbeitung machen zu können.

Der Abstand zwischen benachbarten Spannelementen 104 kann dabei vorteilhaft so ausreichend groß gewählt werden, um auch eine Endenbearbeitung an einer Schmalseite oder vorteilhaft auch an beiden Schmalseiten des Werkstücks 105, also an den kurzen Werkstückseiten, zwischen zwei benachbarten Spannelementen 104 und die Längsbearbeitung einer Längsseite des Werkstücks 105 in einer Aufspannung durchführen zu können.

Die Zuführvorrichtung 106 weist ebenfalls einen länglichen Grundkörper 117 bzw. ein Trägerelement 109 auf, an welchem die Spannelemente 110 mit zwei in y-Richtung 112 vorstehenden Spannbacken 120, 121, die in z-Richtung 111 verlagerbar sind, benachbart und beabstandet zueinander angeordnet sind. Die Zuführvorrichtung 106 ist selbst in y-Richtung und in z-Richtung verlagerbar ausgebildet. Dadurch lassen sich die Werkstücke 105 sowohl beim Einlegen in die Spannbacken 118, 119 der Werkstückhalterung 103, als auch beim Umspannen zwischen den Bearbeitungen von einem Spannbackenpaar zu dem anderen Spannbackenpaar in x-, y- und in z-Richtung relativ zu den Spannbacken 118, 119 versetzen.

Dabei ist es auch möglich, dass in x-Richtung mehrere Werkstücke 105 nebeneinander angeordnet werden und gleichzeitig in den Spannbacken 118, 119 eingespannt werden, so dass sie gleichzeitig bearbeitet werden können.

Mit der Zuführvorrichtung 106 können die mehreren einzelnen Werkstücke 105 gleichzeitig nebeneinander aufgenommen werden, so dass auch deren Position gleichzeitig in x-, y- und in z-Richtung verändert werden kann.

Beim Einlegen von Werkstücken 105 kann dabei bereits eine am Rohteil vorgenommene Bearbeitung berücksichtigt werden, wie beispielsweise vorher ausgetrennte Glasleisten, so dass das Werkstück 105 gegebenenfalls bereits in einem vorhandenen Falz eingespannt werden kann, statt an der Ober- und Unterseite des Werkstücks 105. Auch kann mittels der Zuführvorrichtung 106 beispielweise eine Glasleiste von dem Werkstück 105 entnommen werden. Alternativ können auch andere Elemente entfernt oder entnommen werden. Weiterhin können mittels der Zuführvorrichtung 106 auch dem Werkstück 105 auf dem Werkstücktisch 102 Elemente zugeführt werden, wie ein Beschlag, ein RFID-Chip oder andere Elemente.

Durch den Versatz der Werkstücke 105 können auch Teile mit negativer Spannbrücke nach unten versetzt aufgenommen und eingespannt werden. Normalerweise werden die Teile in der Klemmeinrichtung an der Ober- und Unterseite gespannt. Die Überlappung der beiden Spannflächen ist die sogenannte Spannbrücke. Der Trend geht hin zu Profilen mit sehr kleiner, keiner oder sogar negativer Spannbrücke. Hier gibt es keine Überlappung der Ober- und Unterseite. Das Werkstück 105 muss dann im Falz gespannt werden.

Die erfindungsgemäße Vorrichtung kann vorteilhaft wie nachfolgend beschrieben verwendet werden.

Das Werkstück 105 wird beispielsweise als Rohteil von der Zuführvorrichtung 6, 106 von der Abholposition des Werkstückeinlaufs am Zuführtisch 16,116 aufgenommen.

Anschließend wird das Werkstück 105 mittels der Zuführvorrichtung 6, 106 für die erste Aufspannung in die Spannbacken 118, 119 der Werkstückhalterung eingelegt. Die Lage des Werkstücks 105 kann dabei in y- und z-Richtung variabel ausgerichtet werden, je nach den beabsichtigten durchzuführenden Bearbeitungen an dem Werkstück 105, wobei die y- und z-Ausrichtung durch die Verlagerung der Zuführvorrichtung 106 entlang der Achsen der Zuführvorrichtung 106 gewählt werden kann.

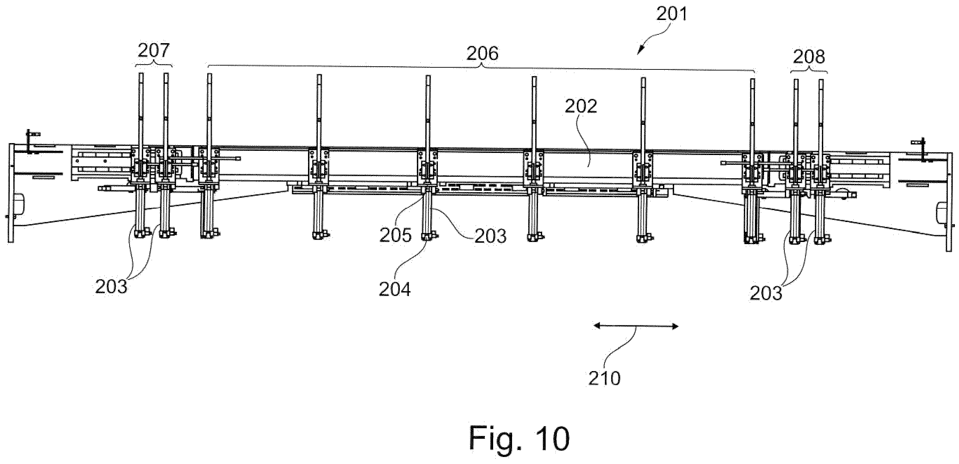

Die Figur 10 zeigt eine Zuführvorrichtung 201 mit einem länglichen Grundkörper 202, an welchem die Spannelemente 203 mit zwei in y-Richtung vorstehenden Spannbacken 204, 205, wobei zumindest eine Spannbacke davon in z-Richtung 111 verlagerbar ist, benachbart und beabstandet zueinander angeordnet sind. Die Zuführvorrichtung 201 ist selbst in y-Richtung und in z-Richtung verlagerbar ausgebildet. Es ist in Figur 10 zu erkennen, dass die Spannelemente 203 in einem mittleren Bereich 206 der Zuführvorrichtung 201 fest angeordnet sind. An den Endbereichen 207, 208 sind jeweils zwei Spannelemente 203 verlagerbar ausgeführt, so dass der Abstand der Spannelemente in x-Richtung 210 einstellbar ist. Dazu können die Spannelemente 203 an dem Grundkörper 202 auf einer Art Schienen oder in Nuten o. Ä. verlagerbar geführt und arretierbar sein. Die Verlagerung kann dabei mittels einer Antriebseinheit vorgenommen werden, wie mittels eines pneumatischen, hydraulischen oder elektrischen Aktuators.

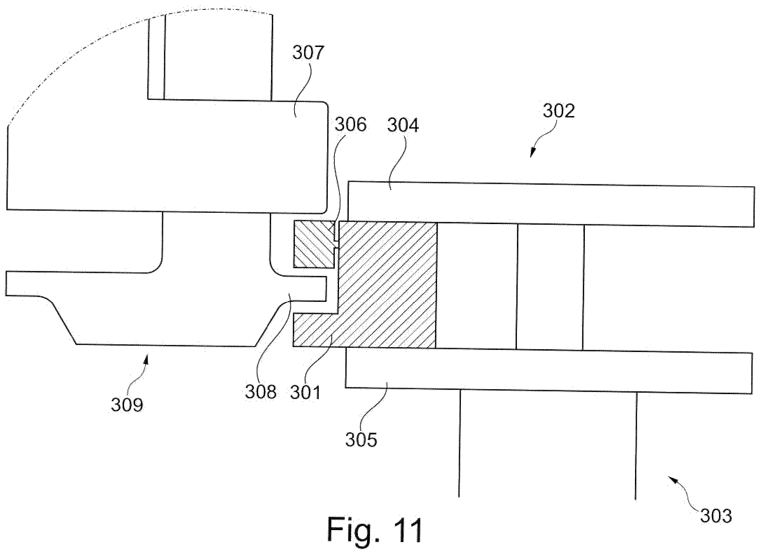

Die Figur 11 zeigt ein Werkstück 301 in einer Einspannung eines Spannelements 302 eines Werkstücktischs 303 im Schnitt. Dabei wird das Werkstück 301 von oberen und unteren Spannbacken 304, 305 gehalten. An dem Werkstück 301 ist eine Glasleiste 306 ausgebildet, die mittels der Spannelemente 307, 308 einer Zuführvorrichtung 309 gefasst und entnommen werden kann.

Die beschriebene Bearbeitung ist dabei insbesondere eine spanende Bearbeitung, wie ein Fräsen, Sägen und/oder Bohren.

### Bezugszeichenliste

- 1: Bearbeitungsvorrichtung
- 2: Werkstücktisch
- 3: Werkstückhalterung
- 4: Spannelement
- 5: Werkstück
- 6: Zuführvorrichtung
- 7: Vorrichtungsgestell
- 8: Führungsvorrichtung
- 9: Trägerelement
- 10: Spannelement
- 11: z-Richtung
- 12: y-Richtung
- 13: x-Richtung
- 14: Werkzeugschlitten
- 15: Werkzeug
- 16: Zuführ- und/oder Auslauftisch
- 17: Grundkörper
- 18: Spannbacken
- 19: Spannbacken
- 20: Spannbacken
- 21: Spannbacken
- 22: Beschickbereich
- 23: Pfeil
- 24: Bearbeitungsbereich
- 101: Bearbeitungsvorrichtung
- 102: Werkstücktisch
- 103: Werkstückhalterung
- 104: Spannelement
- 105: Werkstück
- 106: Zuführvorrichtung
- 107: Vorrichtungsgestell
- 108: Führungsvorrichtung
- 109: Trägerelement
- 110: Spannelement
- 111: z-Richtung
- 112: y-Richtung
- 113: x-Richtung
- 114: Werkzeugschlitten
- 115: Werkzeug
- 116: Zuführ- und/oder Auslauftisch
- 117: Grundkörper
- 118: Spannbacken
- 119: Spannbacken
- 120: Spannbacken
- 121: Spannbacken
- 201: Zuführvorrichtung
- 202: Grundkörper
- 203: Spannelement
- 204: Spannbacken
- 205: Spannbacken
- 206: mittlere Bereich
- 207: Endbereich
- 208: Endbereich
- 210: x-Richtung
- 301: Werkstück
- 302: Spannelement
- 303: Werkstücktisch
- 304: Spannbacken
- 305: Spannbacken
- 306: Glasleiste
- 307: Spannelement
- 308: Spannelement
- 309: Zuführvorrichtung

## Patentansprüche

1. Bearbeitungsvorrichtung (1), insbesondere zum Bearbeiten von Werkstücken (5) aus Holz, Holzwerkstoffen, Kunststoff, mit zumindest einem Werkstücktisch (2) mit einer Werkstückhalterung (3) zum Halten zumindest eines Werkstücks (5) und mit einer Zuführvorrichtung (6) zum Zuführen zumindest eines Werkstücks (5) zu dem zumindest einen Werkstücktisch (2), wobei das zumindest eine Werkstück (5) in drei Dimensionen hinsichtlich des zumindest einen Werkstücktischs (2) positionierbar ist, wobei ein Werkstücktisch (2) oder zwei oder mehr Werkstücktische (2) vorgesehen sind, und
wobei die Zuführvorrichtung (6) zumindest in einer Richtung relativ zu dem zumindest einen Werkstücktisch (2) verlagerbar ist,
wobei die Zuführvorrichtung (6) in zwei Richtungen (y-Richtung, 12, z-Richtung, 11) relativ zu dem zumindest einen Werkstücktisch (2) oder zu den Werkstücktischen (2) verlagerbar ist,
wobei die Zuführvorrichtung (6) mittels zweier Vorschubeinheiten in den beiden Richtungen verlagerbar ist,
wobei der jeweilige Werkstücktisch (2) eine Werkstückhalterung (3) mit einer Anzahl von Spannelementen (4) aufweist, die in der Längsrichtung des jeweiligen Werkstücktischs (2) beabstandet zueinander angeordnet sind und ein Spannelement (4) zwei Paar Spannbacken (18,19) mit jeweils zwei Spannbacken aufweist, wobei jeweils zumindest einer der Spannbacken (19) eines Paares relativ zu dem anderen Spannbacken (18) des Paares verlagerbar ist und wobei die Spannbacken (18,19) eines ersten Paares in einer ersten Richtung senkrecht zur Längsrichtung (13) abragen, wobei die Spannbacken eines zweiten Paares in eine der ersten Richtung entgegengesetzte Richtung senkrecht zur Längsrichtung (13) abragen,
**dadurch gekennzeichnet, dass**
der zumindest eine Werkstücktisch (2) oder zumindest einer der Werkstücktische (2) oder jeder der Werkstücktische (2) zumindest in seiner Längsrichtung (x-Richtung, 13) relativ zur Zuführvorrichtung (6) verlagerbar ist und
wobei der jeweilige Werkstücktisch (2) jeweils mittels einer Vorschubeinheit in seiner Längsrichtung verlagerbar ist.

2. Bearbeitungsvorrichtung (1) nach Anspruch 1, **dadurch gekennzeichnet, dass** mittels der Zuführvorrichtung (6) zumindest ein Werkstück (5) zu zumindest einem der Werkstücktische (2) derart zuführbar ist, dass ein Werkstück (5) oder eine Mehrzahl von Werkstücken (5) gleichzeitig von einem der Werkstücktische (2) haltbar ist und/oder mittels der Zuführvorrichtung (6) gleichzeitig mehr als ein Werkstück (5) zu zumindest einem der Werkstücktische (2) derart zuführbar sind, dass eine Mehrzahl von Werkstücken (5) gleichzeitig von einem der Werkstücktische (2) haltbar ist.

3. Bearbeitungsvorrichtung (1) nach einem der vorhergehenden Ansprüche 1 oder 2, **dadurch gekennzeichnet, dass** die Zuführvorrichtung (6) eine Anzahl von Spannelementen (4) aufweist, die in der Längsrichtung der Zuführvorrichtung (6) beabstandet zueinander angeordnet sind und/oder ein Spannelement (4) zumindest ein Paar Spannbacken mit zwei Spannbacken aufweist, wobei zumindest einer der Spannbacken relativ zu dem anderen Spannbacken verlagerbar ist und/oder ein Spannelement (4) zwei Paar Spannbacken mit jeweils zwei Spannbacken aufweist, wobei jeweils zumindest einer der Spannbacken eines Paares relativ zu dem anderen Spannbacken des Paares verlagerbar ist und/oder die Spannbacken eines Paares jeweils in einer Richtung senkrecht zur Längsrichtung (13) abragen und/oder die Spannbacken eines ersten Paares in einer ersten Richtung senkrecht zur Längsrichtung abragen, wobei die Spannbacken eines zweiten Paares in eine der ersten Richtung entgegengesetzte Richtung senkrecht zur Längsrichtung abragen.

4. Bearbeitungsvorrichtung (1) nach einem der vorhergehenden Ansprüche, **dadurch gekennzeichnet, dass** die Zuführvorrichtung zumindest in einem mittleren Bereich, in Längsrichtung betrachtet, Spannbackenpaare aufweist, die beabstandet zueinander und in Längsrichtung feststehend zueinander angeordnet sind und/oder die Zuführvorrichtung zumindest an einem ihrer Endbereiche, in Längsrichtung betrachtet, zumindest ein Spannbackenpaar aufweist, das in Längsrichtung verlagerbar angeordnet ist und/oder die Zuführvorrichtung zumindest an einem ihrer Endbereiche, in Längsrichtung betrachtet, zumindest zwei Spannbackenpaare aufweist, die in Längsrichtung verlagerbar angeordnet sind und/oder das verlagerbare Spannbackenpaar oder die verlagerbaren Spannbackenpaare der Zuführvorrichtung in ihrer Position in Längsrichtung einstellbar und feststellbar ist bzw. sind und/oder das verlagerbare Spannbackenpaar oder dass die verlagerbaren Spannbackenpaare mittels einer Antriebseinheit verlagerbar ist bzw. sind und/oder einer der Spannbacken relativ zum anderen Spannbacken verdrehbar ist, wie insbesondere um 90°.

5. Verfahren zum Betreiben einer Bearbeitungsvorrichtung (1) gemäß einem der vorhergehenden Ansprüche, zum Bearbeiten von Werkstücken (5) aus Holz, Holzwerkstoffen, Kunststoff, mit einem Werkstücktisch (2) mit einer Werkstückhalterung (3) zum Halten zumindest eines Werkstücks (5) und mit einer Zuführvorrichtung (6) zum Zuführen zumindest eines Werkstücks (5) zum Werkstücktisch (2), **dadurch gekennzeichnet, dass** das Werkstück (5) mittels der Zuführvorrichtung (6) zum Werkstücktisch (2) geführt und auf ihm positioniert wird, wobei das Werkstück (5) in drei Dimensionen hinsichtlich des Werkstücktischs (2) positioniert wird und der Werkstücktisch (2) in seiner Längsrichtung (x-Richtung, 13) relativ zur Zuführvorrichtung (6) verlagert wird und die Zuführvorrichtung (6) in zwei Richtungen (y-Richtung, 12, z-Richtung, 11) relativ zum Werkstücktisch (2) verlagert wird, um ein Werkstück (5) zum Zuführtisch (16) zu positionieren.

6. Verfahren nach Anspruch 5, **dadurch gekennzeichnet, dass** ein Werkstück (5) in der Werkstückhalterung (3) des Werkstücktischs (2) eingespannt wird.

7. Verfahren nach einem der Ansprüche 5 oder 6, **dadurch gekennzeichnet, dass** die Werkstückhalterung (3) Paare von Spannbacken (18,19) aufweist, mittels welchen ein Werkstück (5) in der Werkstückhalterung (3) des Werkstücktischs (2) einspannbar ist und/oder die Werkstückhalterung (3) zumindest zwei Sätze von Paaren von Spannbacken (18,19) aufweist, mittels welchen ein Werkstück (5) in der Werkstückhalterung (3) des Werkstücktischs (2) einspannbar ist, wobei das Werkstück (5) von einem ersten Satz von Paaren zu einem zweiten Satz von Paaren umsetzbar ist.

8. Verfahren nach einem der vorhergehenden Ansprüche 5 bis 7, **dadurch gekennzeichnet, dass** das Werkstück (5) nach einem Einspannen in der Werkstückhalterung (3) mittels zumindest eines Werkzeugs (15) an einer Längsseite bearbeitet wird und/oder das Werkstück (5) nach einem Einspannen in der Werkstückhalterung (3) mittels zumindest eines Werkzeugs (15) an einer Schmalseite mit einer Endenbearbeitung bearbeitet wird und/oder das Werkstück (5) nach einem Einspannen in der Werkstückhalterung (3) mittels zumindest eines Werkzeugs (15) an beiden Schmalseiten mit einer Endenbearbeitung bearbeitet wird.

9. Verfahren nach einem der vorhergehenden Ansprüche 5 bis 8, **dadurch gekennzeichnet, dass** das Werkstück (5) nach einer Bearbeitung des Werkstücks unter Einspannung in einen Satz Spannbacken (18,19) in den zweiten Satz Spannbacken (18,19) umgespannt wird, zur weiteren Bearbeitung des Werkstücks (5), insbesondere an einer zweiten Längsseite und/oder an zumindest einer der Schmalseiten.

10. Verfahren nach einem der vorhergehenden Ansprüche 5 bis 9, **dadurch gekennzeichnet, dass** das Werkstück (5) nach der Bearbeitung von der Zuführvorrichtung (6) vom Werkstücktisch (2) entfernt wird.

11. Verfahren nach einem der vorhergehenden Ansprüche 5 bis 10, **dadurch gekennzeichnet, dass** mittels der Zuführvorrichtung (6) mit zumindest einzelnen seiner Spannbackenpaare von einem Werkstück (5) eine Glasleiste oder ein anderes Element entnommen wird.

12. Verfahren nach einem der vorhergehenden Ansprüche 5 bis 11, **dadurch gekennzeichnet, dass** mittels der Zuführvorrichtung (6) mit zumindest einzelnen seiner Spannbackenpaare an ein Werkstück (5) ein Beschlag, ein RFID-Chip oder ein anderes Element zugeführt wird.

## Claims

1. A machining device (1), in particular for machining workpieces (5) made of wood, wood materials, plastic, with at least one workpiece table (2) with a workpiece holder (3) for holding at least one workpiece (5), and with a supply device (6) for supplying at least one workpiece (5) to the at least one workpiece table (2), wherein the at least one workpiece (5) is positionable in three dimensions with respect to the at least one workpiece table (2), wherein one workpiece table (2) or two or more workpiece tables (2) is or are provided, and
wherein the supply device (6) is shiftable at least in one direction relative to the at least one workpiece table (2),
wherein the supply device (6) is shiftable in two directions (y direction, 12, z direction, 11) relative to the at least one workpiece table (2) or to the workpiece tables (2),
wherein the supply device (6) is shiftable in both directions by means of two advancing units,
wherein the respective workpiece table (2) has a workpiece holder (3) with a number of clamping elements (4) which are arranged spaced apart from one another in the longitudinal direction of the respective workpiece table (2) and a clamping element (4) has two pairs of clamping jaws (18, 19) each with two clamping jaws, wherein in each case at least one of the clamping jaws (19) of a pair is shiftable relative to the other clamping jaw (18) of the pair, and
wherein the clamping jaws (18, 19) of a first pair protrude in a first direction perpendicular to the longitudinal direction (13), wherein the clamping jaws of a second pair protrude in a direction opposed to the first direction perpendicular to the longitudinal direction (13),
**characterised in that**
the at least one workpiece table (2) or at least one of the workpiece tables (2) or each of the workpiece tables (2) is shiftable at least in its longitudinal direction (x direction, 13) relative to the supply device (6), and
wherein the respective workpiece table (2) is shiftable in its longitudinal direction by means of an advancing unit.

2. The machining device (1) as claimed in claim 1, **characterised in that** at least one workpiece (5) is suppliable by means of the supply device (6) to at least one of the workpiece tables (2) in such a manner that one workpiece (5) or a plurality of workpieces (5) is holdable simultaneously by one of the workpiece tables (2) and/or more than one workpiece (5) is suppliable simultaneously by means of the supply device (6) to at least one of the workpiece tables (2) in such a manner that a plurality of workpieces (5) are holdable simultaneously by one of the workpiece tables (2).

3. The machining device (1) as claimed in one of the preceding claims 1 or 2, **characterised in that** the supply device (6) has a number of clamping elements (4) which are arranged spaced apart from one another in the longitudinal direction of the supply device (6) and/or a clamping element (4) has at least one pair of clamping jaws with two clamping jaws, wherein at least one of the clamping jaws is shiftable relative to the other clamping jaw and/or a clamping element (4) has two pairs of clamping jaws each with two clamping jaws, wherein in each case at least one of the clamping jaws of a pair is shiftable relative to the other clamping jaw of the pair and/or the clamping jaws of a pair each protrude in a direction perpendicular to the longitudinal direction (13) and/or the clamping jaws of a first pair protrude in a first direction perpendicular to the longitudinal direction, wherein the clamping jaws of a second pair protrude in a direction opposed to the first direction perpendicular to the longitudinal direction.

4. The machining device (1) as claimed in one of the preceding claims, **characterised in that** the supply device, at least in a central region, as viewed in the longitudinal direction, has clamping jaw pairs which are arranged spaced apart from one another and fixed with respect to one another in the longitudinal direction and/or the supply device, at least on one of its end regions, as viewed in the longitudinal direction, has at least one clamping jaw pair which is arranged so as to be shiftable in the longitudinal direction and/or the supply device, at least on one of its end regions, as viewed in the longitudinal direction, has at least two clamping jaw pairs which are arranged so as to be shiftable in the longitudinal direction and/or the shiftable clamping jaw pair or the shiftable clamping jaw pairs of the supply device is or are adjustable and fixable in their position in the longitudinal direction and/or the shiftable clamping jaw pair or the shiftable clamping jaw pairs is or are shiftable by means of a drive unit and/or one of the clamping jaws is rotatable relative to the other clamping jaw, in particular by 90°.

5. A method for operating a machining device (1) as claimed in one of the preceding claims, for machining workpieces (5) made of wood, wood materials, plastic, with a workpiece table (2) with a workpiece holder (3) for holding at least one workpiece (5), and with a supply device (6) for supplying at least one workpiece (5) to the workpiece table (2), **characterised in that** the workpiece (5) is guided to the workpiece table (2) and is positioned thereon by means of the supply device (6), wherein the workpiece (5) is positioned in three dimensions with respect to the workpiece table (2) and the workpiece table (2) is shifted in its longitudinal direction (x direction, 13) relative to the supply device (6), and the supply device (6) is shifted in two directions (y direction, 12, z direction, 11) relative to the workpiece table (2) in order to position a workpiece (5) with respect to the supply table (16).

6. The method as claimed in claim 5, **characterised in that** one workpiece (5) is clamped in the workpiece holder (3) of the workpiece table (2).

7. The method as claimed in one of claims 5 or 6, **characterised in that** the workpiece holder (3) has pairs of clamping jaws (18, 19) by means of which a workpiece (5) can be clamped in the workpiece holder (3) of the workpiece table (2) and/or the workpiece holder (3) has at least two sets of pairs of clamping jaws (18, 19) by means of which a workpiece (5) can be clamped in the workpiece holder (3) of the workpiece table (2), wherein the workpiece (5) is transferable from a first set of pairs to a second set of pairs.

8. The method as claimed in one of the preceding claims 5 to 7, **characterised in that** the workpiece (5), following clamping in the workpiece holder (3), is machined on a longitudinal side by means of at least one tool (15) and/or the workpiece (5), following clamping in the workpiece holder (3), is machined with end finishing machining on a narrow side by means of at least one tool (15) and/or the workpiece (5), following clamping in the workpiece holder (3), is machined with end finishing machining on both narrow sides by means of at least one tool (15).

9. The method as claimed in one of the preceding claims 5 to 8, **characterised in that,** following machining of the workpiece by clamping same in a set of clamping jaws (18, 19), the workpiece (5) is rechucked into the second set of clamping jaws (18, 19), for the further machining of the workpiece (5), in particular on a second longitudinal side and/or on at least one of the narrow sides.

10. The method as claimed in one of the preceding claims 5 to 9, **characterised in that,** following the machining, the workpiece (5) is removed from the workpiece table (2) by the supply device (6).

11. The method as claimed in one of the preceding claims 5 to 10, **characterised in that** a glass strip or another element is removed from a workpiece (5) by means of the supply device (6) with at least individual pairs of its clamping jaw pairs.

12. The method as claimed in one of the preceding claims 5 to 11, **characterised in that** a fitting, an RFID chip or another element is supplied to a workpiece (5) by means of the supply device (6) with at least individual pairs of its clamping jaw pairs.

## Revendications

1. Dispositif d'usinage (1), servant en particulier à l'usinage de pièces à usiner (5), lesdites pièces étant en bois, dans des matériaux à base de bois, en plastique, ledit dispositif d'usinage comprenant au moins une table d'usinage porte-pièces (2) comportant un porte-pièces (3) servant au maintien d'au moins une pièce à usiner (5), et comprenant un dispositif d'amenée (6) servant à amener au moins une pièce à usiner (5) jusqu'à l'au moins une table d'usinage porte-pièces (2), où l'au moins une pièce à usiner (5) peut être positionnée dans trois dimensions par rapport à l'au moins une table d'usinage porte-pièces (2), où il est prévu une table d'usinage porte-pièces (2) ou deux ou plus tables d'usinage porte-pièces (2), et
où le dispositif d'amenée (6) peut être déplacé dans au moins une direction par rapport à l'au moins une table d'usinage porte-pièces (2),
où le dispositif d'amenée (6) peut être déplacé dans deux directions (direction y, 12, direction z, 11) par rapport à l'au moins une table d'usinage porte-pièces (2) ou par rapport aux tables d'usinage porte-pièces (2),
où le dispositif d'amenée (6) peut être déplacé dans les deux directions au moyen de deux unités d'avancement,
où la table d'usinage porte-pièces respective (2) présente un porte-pièces (3) comportant un certain nombre d'éléments de serrage (4) qui sont disposés en étant espacés les uns des autres dans le sens de la longueur de la table d'usinage porte-pièces respective (2), et un élément de serrage (4) présente deux paires de mâchoires de serrage (18, 19) comprenant à chaque fois deux mâchoires de serrage, où à chaque fois au moins l'une des mâchoires de serrage (19) d'une paire peut être déplacée par rapport à l'autre mâchoire de serrage (18) de la paire, et
où les mâchoires de serrage (18, 19) d'une première paire font saillie dans une première direction perpendiculaire à la direction longitudinale (13), où les mâchoires de serrage d'une deuxième paire font saillie perpendiculairement à la direction longitudinale (13), dans une direction opposée à la première direction,
**caractérisé en ce que**
l'au moins une table d'usinage porte-pièces (2) ou au moins l'une des tables d'usinage porte-pièces (2) ou chacune des tables d'usinage porte-pièces (2) peut être déplacée au moins dans le sens de sa longueur (direction x, 13), par rapport au dispositif d'amenée (6), et
où la table d'usinage porte-pièces respective (2) peut être déplacée dans le sens de sa longueur à chaque fois au moyen d'une unité d'avancement.

2. Dispositif d'usinage (1) selon la revendication 1, **caractérisé en ce qu'**au moins une pièce à usiner (5) peut être amenée, au moyen du dispositif d'amenée (6), jusqu'à au moins l'une des tables d'usinage porte-pièces (2), de manière telle qu'une pièce à usiner (5) ou une pluralité de pièces à usiner (5) puisse être maintenue en même temps par l'une des tables d'usinage porte-pièces (2) et/ou **en ce qu'**en même temps plus d'une pièce à usiner (5) puisse être amenée, au moyen du dispositif d'amenée (6), jusqu'à au moins l'une des tables d'usinage porte-pièces (2), de manière telle qu'une pluralité de pièces à usiner (5) puisse être maintenue en même temps par l'une des tables d'usinage porte-pièces (2).

3. Dispositif d'usinage (1) selon l'une des revendications précédentes 1 ou 2, **caractérisé en ce que** le dispositif d'amenée (6) présente un certain nombre d'éléments de serrage (4) qui sont disposés en étant espacés les uns des autres dans le sens de la longueur du dispositif d'amenée (6) et/ou **en ce qu'**un élément de serrage (4) présente au moins une paire de mâchoires de serrage comprenant deux mâchoires de serrage, où au moins l'une des mâchoires de serrage peut être déplacée par rapport à l'autre mâchoire de serrage et/ou **en ce qu'**un élément de serrage (4) présente deux paires de mâchoires de serrage comprenant à chaque fois deux mâchoires de serrage, où à chaque fois au moins l'une des mâchoires de serrage d'une paire peut être déplacée par rapport à l'autre mâchoire de serrage de la paire et/ou **en ce que** les mâchoires de serrage d'une paire font saillie à chaque fois dans une direction perpendiculaire à la direction longitudinale (13) et/ou **en ce que** les mâchoires de serrage d'une première paire font saillie dans une première direction perpendiculaire à la direction longitudinale, où les mâchoires de serrage d'une deuxième paire font saillie perpendiculairement à la direction longitudinale, dans une direction opposée à la première direction.

4. Dispositif d'usinage (1) selon l'une quelconque des revendications précédentes, **caractérisé en ce que** le dispositif d'amenée, au moins dans une zone médiane en regardant dans le sens de la longueur, présente des paires de mâchoires de serrage qui sont espacées les unes des autres et disposées de manière fixe les unes par rapport aux autres et/ou **en ce que** le dispositif d'amenée, au moins au niveau de l'une de ses zones d'extrémité en regardant dans le sens de la longueur, présente au moins une paire de mâchoires de serrage qui est disposée en étant mobile dans le sens de la longueur et/ou **en ce que** le dispositif d'amenée, au moins au niveau de l'une de ses zones d'extrémité en regardant dans le sens de la longueur, présente au moins deux paires de mâchoires de serrage qui sont disposées en étant mobiles dans le sens de la longueur et/ou **en ce que** la paire de mâchoires de serrage mobiles ou les paires de mâchoires de serrage mobiles du dispositif d'amenée peut ou peuvent être ajustée(s) et verrouillée(s) dans leur position dans le sens de la longueur et/ou **en ce que** la paire de mâchoires de serrage mobiles ou les paires de mâchoires de serrage mobiles peut ou peuvent être déplacée(s) au moyen d'une unité d'entraînement et/ou **en ce que** l'une des mâchoires de serrage peut être tournée, en particulier de 90°, par rapport à l'autre mâchoire de serrage.

5. Procédé de fonctionnement d'un dispositif d'usinage (1) selon l'une quelconque des revendications précédentes, ledit dispositif servant à l'usinage de pièces à usiner (5), lesdites pièces étant en bois, dans des matériaux à base de bois, en plastique, ledit dispositif d'usinage comprenant au moins une table d'usinage porte-pièces (2) comportant un porte-pièces (3) servant au maintien d'au moins une pièce à usiner (5), et comprenant un dispositif d'amenée (6) servant à amener au moins une pièce à usiner (5) jusqu'à la table d'usinage porte-pièces (2), **caractérisé en ce que** la pièce à usiner (5) est guidée au moyen du dispositif d'amenée (6) jusqu'à la table d'usinage porte-pièces (2) et positionnée sur celle-ci, où la pièce à usiner (5) est positionnée dans trois dimensions par rapport à la table d'usinage porte-pièces (2), et la table d'usinage porte-pièces (2) peut être déplacée, dans le sens de sa longueur (direction x, 13), par rapport au dispositif d'amenée (6), et le dispositif d'amenée (6) peut être déplacé dans deux directions (direction y, 12, direction z, 11) par rapport à la table d'usinage porte-pièces (2), afin de positionner une pièce à usiner (5) sur la table d'amenée (16).

6. Procédé selon la revendication 5, **caractérisé en ce qu'**une pièce à usiner (5) est serrée dans le porte-pièces (3) de la table d'usinage porte-pièces (2).

7. Procédé selon l'une des revendications 5 ou 6, **caractérisé en ce que** le porte-pièces (3) présente des paires de mâchoires de serrage (18, 19) au moyen desquelles une pièce à usiner (5) peut être serrée dans le porte-pièces (3) de la table d'usinage porte-pièces (2) et/ou **en ce que** le porte-pièces (3) présente au moins deux jeux de paires de mâchoires de serrage (18, 19) au moyen desquels une pièce à usiner (5) peut être serrée dans le porte-pièces (3) de la table d'usinage porte-pièces (2), où la pièce à usiner (5) peut être déplacée, en passant d'un premier jeu de paires dans un deuxième jeu de paires.

8. Procédé selon l'une quelconque des revendications précédentes 5 à 7, **caractérisé en ce que** la pièce à usiner (5), après un serrage dans le porte-pièces (3), est usinée sur un grand côté au moyen au moins d'un outil (15) et/ou **en ce que** la pièce à usiner (5), après un serrage dans le porte-pièces (3), est usinée en procédant à un usinage des extrémités sur un petit côté au moyen au moins d'un outil (15) et/ou **en ce que** la pièce à usiner (5), après un serrage dans le porte-pièces (3), est usinée en procédant à un usinage des extrémités sur les deux petits côtés au moyen au moins d'un outil (15).

9. Procédé selon l'une quelconque des revendications précédentes 5 à 8, **caractérisé en ce que** la pièce à usiner (5), après un usinage de la pièce à usiner ayant été serrée dans un jeu de mâchoires de serrage (18, 19), est changée d'outil dans le deuxième jeu de mâchoires de serrage (18, 19), afin de procéder à l'usinage ultérieur de la pièce à usiner (5), en particulier sur un deuxième grand côté et/ou sur au moins un des petits côtés.

10. Procédé selon l'une quelconque des revendications précédentes 5 à 9, **caractérisé en ce que** la pièce à usiner (5), après l'usinage, est enlevée de la table d'usinage porte-pièces (2) par le dispositif d'amenée (6).

11. Procédé selon l'une quelconque des revendications précédentes 5 à 10, **caractérisé en ce qu'**une parclose de vitrage ou un autre élément est retiré(e) de la pièce à usiner (5) au moyen du dispositif d'amenée (6) avec au moins certaines de ses paires de mâchoires de serrage.

12. Procédé selon l'une quelconque des revendications précédentes 5 à 11, **caractérisé en ce qu'**une ferrure, une puce RFID ou un autre élément est amené(e) à une pièce à usiner (5) au moyen du dispositif d'amenée (6) avec au moins certaines de ses paires de mâchoires de serrage.
